Europäisches Patentamt

European Patent Office

Office européen des brevets

(19)

(11) Numéro de publication: **0 297 449 B1**

## (12) FASCICULE DE BREVET EUROPEEN

(45) Date de publication de fascicule du brevet:
**30.10.91**

(51) Int. Cl.⁵: **G01B 7/00**, G01B 3/00

(21) Numéro de dépôt: **88110071.3**

(22) Date de dépôt: **24.06.88**

(54) **Capteur pour la mesure des dimensions d'un objet par palpage.**

(30) Priorité: **29.06.87 CH 2443/87**
**01.07.87 FR 8709358**

(43) Date de publication de la demande:
**04.01.89 Bulletin 89/01**

(45) Mention de la délivrance du brevet:
**30.10.91 Bulletin 91/44**

(84) Etats contractants désignés:
**DE FR GB IT SE**

(56) Documents cités:
**EP-A- 0 163 070**
**DE-A- 3 313 861**
**DE-B- 1 084 107**
**US-A- 3 368 283**

**PATENT ABSTRACTS OF JAPAN, vol. 8, no.
147 (P-285)[1584], 10 juillet 1984; & JP-A-59
46 802 (MITSUTOYO SEISAKUSHO K.K.)
16-03-1984**

(73) Titulaire: **MESELTRON S.A.
Avenue Beauregard 14/18
CH-2035 Corcelles(CH)**

(72) Inventeur: **Juillerat, Denis
Colline 20
Ch-2400 Le Locle(CH)**

(74) Mandataire: **Barbeaux, Bernard et al
ICB Ingénieurs Conseils en Brevets SA Passage Max. Meuron 6
CH-2001 Neuchâtel(CH)**

## Description

La présente invention concerne les capteurs qui permettent de mesurer les dimensions d'un objet par palpage.

Ces capteurs font partie de machines à mesurer qui sont souvent associées à des machines-outils pour permettre de contrôler avec une grande précision les dimensions d'une pièce en cours ou en fin d'usinage.

Plus précisément l'invention a pour objet un capteur qui comporte:

- un palpeur;
- un dispositif de suspension comprenant au moins une première partie dont ce palpeur est solidaire et une deuxième partie assemblées de façon à pouvoir se déplacer sensiblement parallèlement l'une par rapport à l'autre dans une première direction;
- un transducteur pour mesurer le déplacement relatif de ces deux parties; et
- un générateur de force pour assigner une position de repos stable au palpeur et pour lui permettre d'exercer sur la surface de l'objet à mesurer une force d'appui qui commence par croître linéairement et rapidement au fur et à mesure qu'il s'écarte de sa position de repos dans un domaine de mesure et qui devient ensuite légèrement croissante dans un domaine de dégagement, ce générateur comportant lui-même des premiers moyens élastiques liés à l'une des parties du dispositif de suspension et déformables dans ladite première direction et un ensemble porté par l'autre partie de ce dispositif qui comprend des moyens de butée, deux éléments mobiles qui interagissent avec les premiers moyens élastiques et des seconds moyens élastiques qui agissent en sens opposé sur ces éléments mobiles pour tenter de les maintenir en permanence en appui contre les moyens de butée, les premiers et seconds moyens élastiques étant tels que, dans le domaine de mesure, les éléments mobiles restent en contact avec les moyens de butée pour amener les premiers moyens élastiques à se déformer et que, dans le domaine de dégagement, l'un des éléments mobiles s'écarte progressivement de ces moyens de butée sous l'action des premiers moyens élastiques et à l'encontre des seconds qui se déforment à leur tour.

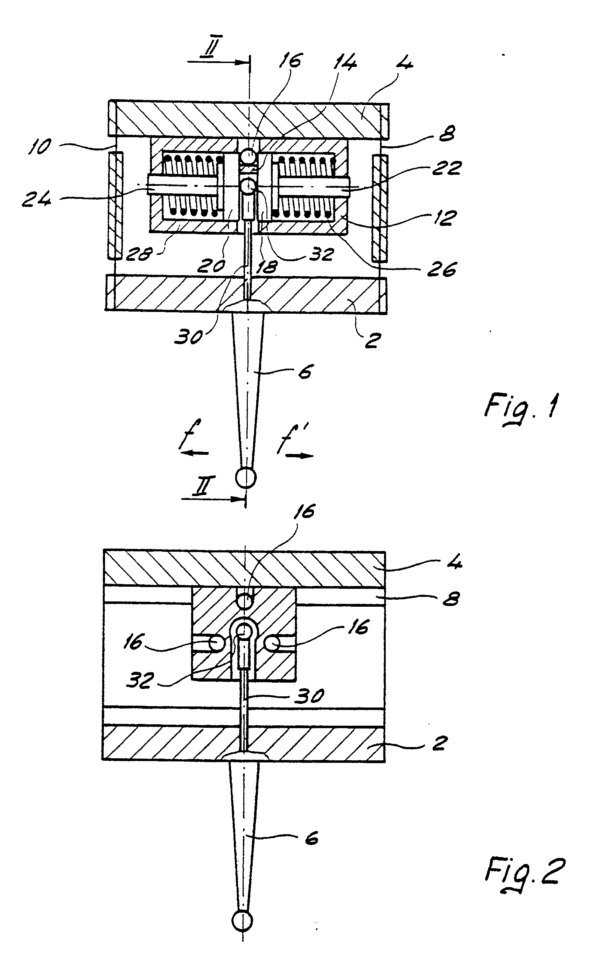

Un capteur connu de ce genre est décrit dans le brevet US-A-3 945 124 et représenté schématiquement en coupes longitudinales aux figures 1 et 2, la figure 2 étant une vue selon le plan II-II de la figure 1.

Dans ce capteur connu les deux parties assemblées du dispositif de suspension dont on vient de parler sont constituées par deux plaques rigides 2 et 4 dont l'une porte le palpeur 6 et qui sont reliées entre elles par deux lames élastiques 8 et 10 de façon à constituer avec celles-ci un parallélépipède déformable et à ne permettre au palpeur de se déplacer par rapport à la plaque 4 dont il n'est pas solidaire que dans une seule direction qui est parallèle à cette plaque et qui est celle indiquée sur la figure 1 par les flèches opposées f et f'.

Pour simplifier on n'a pas représenté sur le dessin le transducteur par exemple de type inductif ou capacitif qui permet de mesurer les déplacements du palpeur.

Par contre, on peut y voir le générateur de force qui comprend une cage 12 fixée à la plaque 4 et séparée en deux par une paroi médiane 14 dans des encoches de laquelle sont logées trois billes 16 disposées en cercle qui ont un diamètre légèrement supérieur à son épaisseur.

De part et d'autre de cette paroi se trouvent deux flasques 18 et 20 qui sont placés au bout de tiges de guidage rigides 22 et 24 de façon à pouvoir coulisser à l'intérieur de la cage et deux ressorts hélicoïdaux identiques et précontraints 26 et 28 qui tendent en permanence à maintenir les flasques 18 et 20 appuyés contre les billes 16.

Enfin, le générateur de force comprend également dans ce cas une tige flexible 30, réalisée par exemple au moins partiellement en matériau piézo-électrique, dont l'une des extrémités est solidaire de la plaque 2 et dont l'autre extrémité porte une tête sphérique 32 de même diamètre que les billes 16 et pénètre à l'intérieur d'une quatrième encoche de la paroi 14 pour que cette tête se trouve pratiquement au centre du cercle sur lequel sont placées les billes.

Ainsi, tant que le palpeur n'est soumis à aucune action qui permettrait de le déplacer dans la direction des flèches f et f', par rapport à la plaque 4, celui-ci reste dans une position de repos qui sert de "zero", c'est-à-dire de position de référence pour les mesures et qui est bien entendu celle pour laquelle les lames élastiques 8, 10 et la tige 30 ne sont soumises à aucune déformation. Dans cette situation qui est celle qui est représentée sur les figures 1 et 2 la tête de la tige n'exerce aucune force sur les flasques 18 et 20 qui sont alors en contact avec les billes.

Supposons maintenant que la plaque 4 soit fixe et que l'on amène un objet à mesurer au contact du palpeur dans le sens de la flèche f'. Au moment où ce contact s'établit le palpeur est encore en position de repos et la force d'appui qu'il exerce sur l'objet est alors nulle.

Si, ensuite, on déplace l'objet toujours dans le sens de la flèche f' les lames élastiques 8 et 10 se courbent et la tige flexible 30 fait de même jusqu'à ce que la force exercée par la tête 32 sur le flasque 18 atteigne celle du ressort 26. Après, la tige 30 ne se déforme pratiquement plus et c'est le ressort 26 qui se comprime en même temps que les lames élastiques continuent à se courber.

Naturellement, si l'on amenait l'objet au contact du palpeur dans le sens de la flèche f et si on continuait ensuite à le déplacer dans ce sens les déformations des lames et de la tige se produiraient en sens inverse et ce serait alors le flasque 20 et le ressort 28 qui seraient concernés.

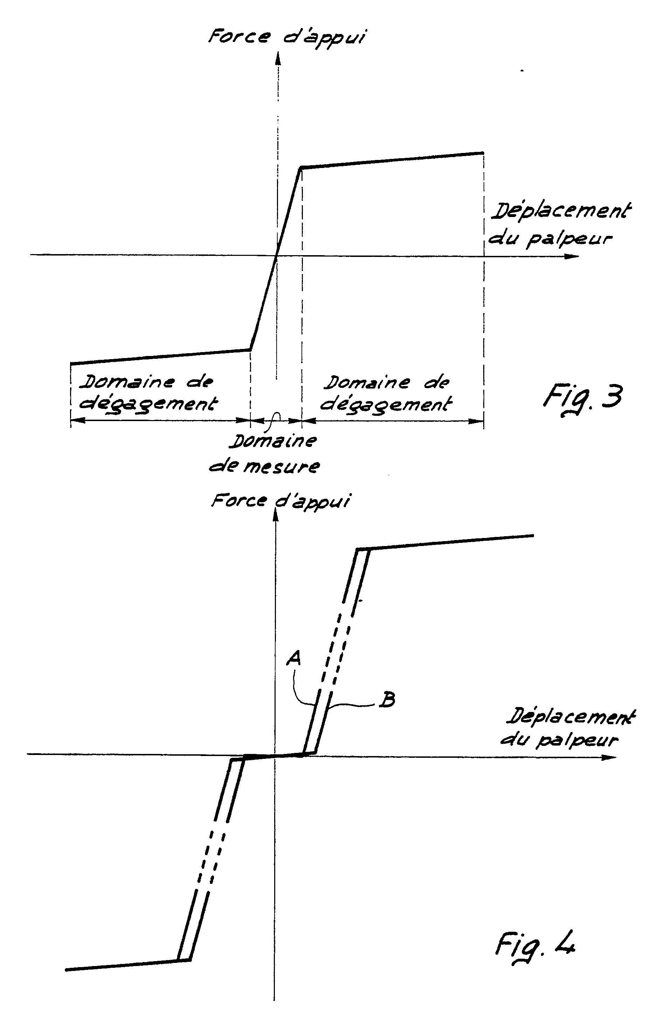

Si l'on regarde maintenant la figure 3 qui montre la variation de la force d'appui que le palpeur 6 exerce sur l'objet en fonction de son déplacement par rapport à la plaque 4 on constante que l'on a bien au début une force qui croît linéairement et rapidement à partir de zéro, lorsque la tige 30 se déforme, puis toujours linéairement mais beaucoup plus lentement à partir du moment où celle-ci déplace l'un des flasques à l'encontre du ressort qui lui est associé.

Comme on l'a laissé entendre le domaine de déplacement du palpeur dans lequel la force d'appui croît rapidement est celui dans lequel des mesures peuvent être effectuées. L'autre domaine dit "de dégagement", qui est beaucoup plus grand est prévu pour éviter que le capteur et/ou l'objet soient endommagés lorsque l'on procède à des mesures. Par exemple, il permet de freiner et éventuellement de stopper le mouvement d'avance d'une pièce sur une machine-outil lorsque celle-ci s'approche du capteur ou inversement.

En fait, ce que l'on vient de dire à propos de la force d'appui n'est tout à fait exact que si les billes 16 et la tête 32 de la tige ont rigoureusement le même diamètre.

En effet, si le diamètre de la tête 32 est légèrement plus faible que celui des billes, lorsque le palpeur se déplace la tige 30 ne se déforme pas tout de suite. Elle ne commence à le faire que lorsque la tête 32 est en contact avec l'un des flasques. Donc au début la force de mesure, c'est-à-dire la force d'appui du palpeur sur l'objet mesuré, qui n'est due qu'à la déformation des lames élastiques 8 et 10 est pratiquement nulle, comme le montre la courbe A du diagramme de la figure 4 qui est représentée à une échelle beaucoup plus grande que celle de la figure 3.

Si, au contraire, le diamètre de la tête est supérieur à celui des billes celle-ci est soumise au départ aux actions opposées des deux ressorts 26 et 28 et l'un d'eux aide la tige à suivre le mouvement du palpeur à l'encontre de l'autre. De ce fait la force de mesure commence par croître très lentement et ce n'est qu'à partir du moment où le flasque 18, si le palpeur se déplace dans le sens de la flèche f, ou le flasque 20, si le palpeur se déplace dans le sens de la flèche f, touche les billes que cette force se met à croître rapidement. Ceci est illustré par la courbe B de la figure 4.

Donc, dans les deux cas la position de repos du palpeur n'est plus très bien définie et il peut se produire un phénomène d'hystérèse suffisamment important pour fausser les mesures. Il suffit pour cela que la différence de diamètre entre la tête de la tige et les billes soit du même ordre de grandeur que la résolution du capteur.

Par conséquent, si l'on veut que le capteur soit capable d'effectuer correctement des mesures au dizième de micron près, ce qui est fréquent, les tolérances dont on dispose pour la fabrication des billes et de la tête de la tige sont très faibles pour ne pas dire nulles et ceci pose évidemment un problème.

De plus, lorsque l'on se sert du capteur les billes ne s'usent pas à la même vitesse que la tête de la tige, ce qui fait que même si l'on résout ce problème de tolérances la possibilité d'erreurs de mesure n'est pas écartée.

Enfin, ce type de capteur a également un autre défaut: c'est que pour des déplacements importants du palpeur il y a un glissement et un frottement de la tête de la tige sur l'un ou l'autre des flasques qui peuvent eux aussi être la cause d'une certaine hystérèse et que, pour cette raison, le domaine de mesure est forcément très limité. Par exemple avec les capteurs qui sont commercialisés actuellement par la société Ernst Leitz GmbH, qui est titulaire du brevet américain précité, on ne peut faire des mesures que dans un domaine de ± 16 $\mu$m. Or pour certaines utilisations il serait intéressant d'avoir un domaine de mesure nettement plus large.

Le but de l'invention est de fournir un capteur qui ne présente pas ces inconvénients et il est atteint grâce au fait que dans le générateur de force du capteur selon l'invention les premiers moyens élastiques comprennent deux premiers ressorts antagonistes, sur lesquels les éléments mobiles agissent en sens contraire, et réciproquement, et qui sont soumis par ces éléments à une précontrainte lorsque le palpeur est en position de repos, cette précontrainte étant suffisante pour que ces premiers ressorts soient toujours tous les deux plus ou moins sous tension tant que les déplacements du palpeur se situent à l'intérieur du domaine de mesure.

L'invention sera mieux comprise à la lecture de la description qui suit et qui se réfère au dessin annexé sur lequel:

- les figures 1 à 4 représentent ce que l'on à déjà indiqué;
- la figure 5 est une vue en coupe longitudinale d'une forme possible d'exécution d'un capteur unidimensionnel selon l'invention, sur laquelle le palpeur se trouve en position de repos;

- la figure 6 est une autre vue en coupe longitudinale de cette forme d'exécution, selon le plan VI-VI de la figure 5;
- la figure 7 est une vue en coupe transversale partielle, selon le plan VII-VII de la figure 5, qui montrent la forme des deux resorts qui constituent les premiers moyens élastiques du générateur de force dans cette form d'exécution;
- la figure 8 est ne vue en coupe semblable à celle de la figure 5 qui montre l'état du capteur lorsque le palpeur se trouve dans une position située dans le domaine de dégagement;
- la figure 9 est une vue en plan qui montre une autre forme possible et avantageuse de réalisation des deux ressorts et de leurs moyens de fixation; et
- la figure 10 est une vue en perspective qui montre schématiquement comment le dispositif de suspension du palpeur peut par exemple être réalisé lorsque le capteur selon l'invention est tridimensionnel.

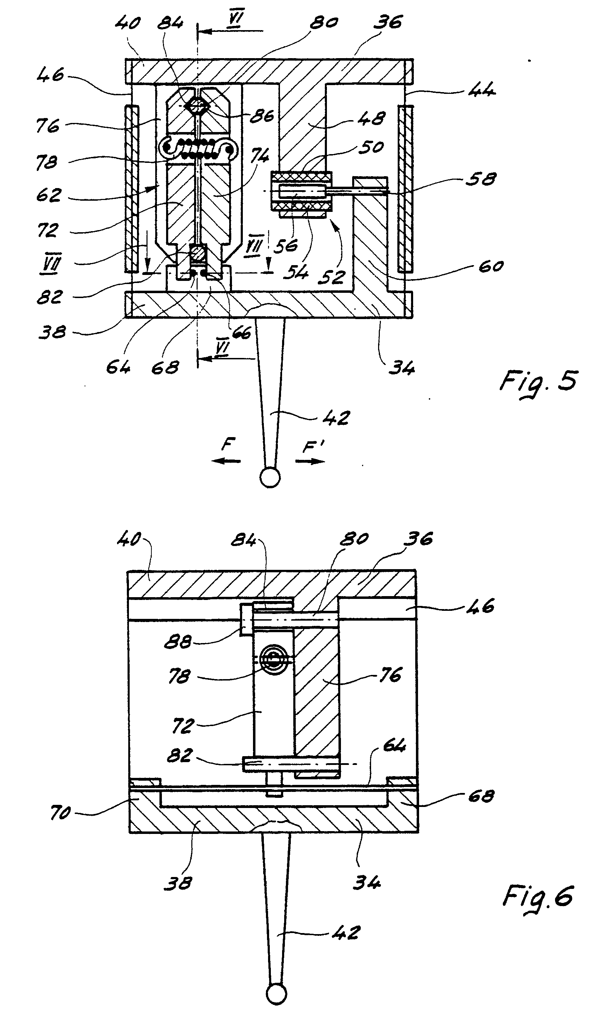

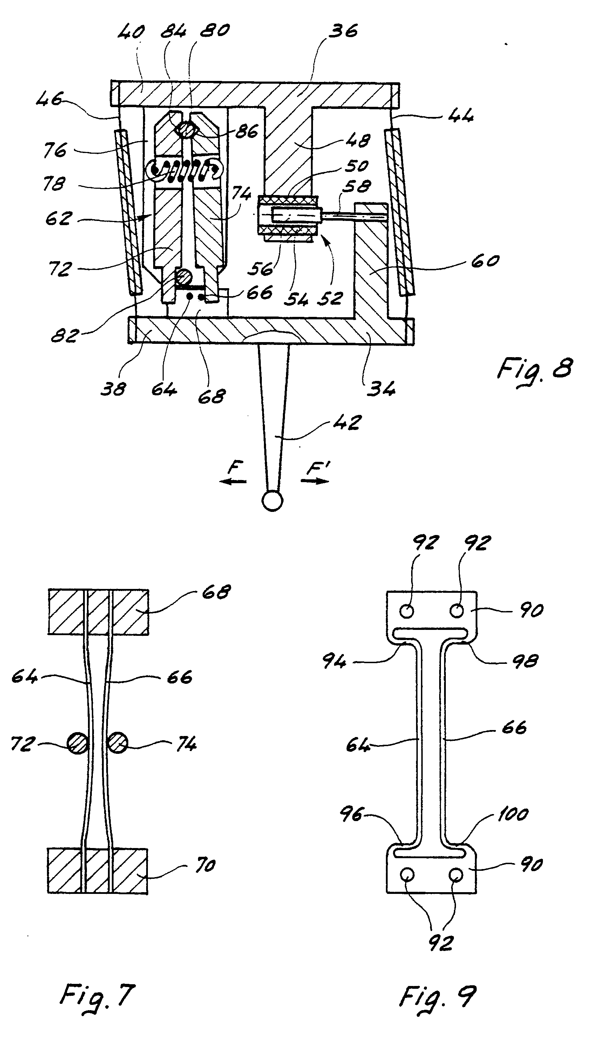

Le capteur représenté sur les figures 5 à 8 comprend deux ponts rigides 34 et 36 avec des parties planes respectives 38 et 40 dont l'une porte le palpeur 42 alors que l'autre est fixée par exemple à un châssis où à un support non représenté du capteur et qui sont elles aussi reliées entre elles par deux lames élastiques 44 et 46 de façon à former avec celles-ci un cadre parallélépipèdique déformable et à ne pouvoir se déplacer que parallèlement l'une par rapport à l'autre et dans une seule direction qui est celle qui est indiquée par les flèches F et F′ sur les figures 5 et 8.

De plus, comme dans le cas du capteur connu des figures 1 et 2, les lames élastiques 44 et 46 sont telles que leur participation à la création d'une force d'appui du palpeur sur un objet à mesurer soit la plus faible possible mais, bien entendu, sans que leur souplesse aille jusqu'à permettre une torsion ou un aplatissement même minime du cadre dont elles font partie au moment d'une mesure. Pour cette raison on ne parlera pas par la suite de cette participation que l'on considèrera comme négligeable.

Cela dit, si l'on regarde les figures 5 et 8, constate que le pont supérieur 36 comporte un montant 48 qui s'étend en direction du pont inférieur et qui présente à son extrémité un trou cylindrique 50 d'axe sensiblement parallèle à la direction de déplacement du palpeur, dans lequel est logée une bobine 54. Cette bobine est l'un des éléments d'un transducteur inductif 52 qui sert à mesurer les déplacements relatifs du palpeur par rapport au pont supérieur 36. L'autre élément de ce transducteur est évidemment un noyau en matériau magnétique 56, par exemple en ferrite, qui est fixé au bout d'une tige 58 portée par un autre montant 60 qui, lui, fait partie du pont inférieur 34.

Naturellement, il n'y aurait aucun inconvénient à ce que la bobine 54 soit portée par le montant 60 et le noyau 56 par le montant 48.

Par ailleurs, il est bien clair que ce transducteur inductif 52 pourrait être remplacé par un transducteur d'un autre type, par exemple capacitif.

On va maintenant décrire la partie du capteur dans laquelle réside l'invention c'est-à-dire le générateur de force.

Ce générateur qui est désigné par le repère 62 comprend tout d'abord deux tiges flexibles, identiques et par exemple métalliques, 64 et 66 dont la caractéristique d'élasticité est linéaire dans le cadre des déformations qu'elles peuvent subir et qui sont fixées par leurs extrémités au pont inférieur 34 de façon à être à la fois sensiblement parallèles entre elles et aux parties planes des ponts, orthogonales à la direction de déplacement du palpeur et relativement proches l'une de l'autre.

Comme le montrent les figures 6 et 7, ces tiges 64 et 66, qui constituent ici les deux ressorts antagonistes dont on a parlé, sont tendues entre deux bossages opposés 68 et 70 du pont inférieur 34 dans les trous desquels leurs extrémités sont encastrées.

D'autre part, en regardent les figures 5 et 7 on peut voir que le générateur de force 62 comporte également, comme éléments mobiles, deux leviers jumeaux 72 et 74 qui s'étendent dans le sens de la hauteur du cadre déformable et qui sont portés par un autre montant 76 du pont supérieur 36 de façon à se trouver pratiquement dans le plan médiateur des tiges flexibles, à avoir leurs extrémités inférieures situées de part et d'autre de celles-ci et à être disposés symétriquement par rapport au plan qui est à la fois perpendiculaire à la direction de déplacement du palpeur et équidistant de ces tiges lorsque le capteur est au repos.

On voit aussi qu'entre ces deux leviers est tendu un ressort hélicoïdal de traction 78 qui les attirent l'un vers l'autre et qui tend en permanence à les maintenir appuyés contre deux goupilles 80 et 82 fixées au montant 76 et interposées entre eux.

La première 80 de ces goupilles qui se trouve près de la base du montant 76 et qui s'engage partiellement dans deux gorges en V 84 et 86 en regard l'une de l'autre que les leviers présentent près de leurs extrémités supérieures est prévue pour servir à la fois de support et d'axe de pivotement commun pour ces leviers. De plus, grâce à la tête 88 dont elle est munie, elle permet de les maintenir en appui contre le montant 76.

L'autre goupille 82, qui est placée au contraire près de l'extrémité de ce montant, constitue les moyens de butée dont on a également parlé.

Lorsque le palpeur est en position de repos les leviers 72 et 74 sont effectivement maintenus en contact avec cette goupille par le ressort 78 et, conformément à l'invention, les tiges 64 et 66 sont alors soumises par ceux-ci à une précontrainte, c'est-à-dire à une flexion initiale dans la direction de déplacement du palpeur, qui est évidemment la même pour les deux. La seule différence c'est que l'une des tiges est incurvée dans un sens et l'autre dans l'autre (voir figure 7).

Dans cette situation les tiges exercent sur les leviers des forces égales et opposées dont le moment par rapport à l'axe de pivotement 80 est nettement inférieur à celui des forces exercées sur ces mêmes leviers par le ressort 78.

A noter que ce ressort est choisi de façon à présenter lui aussi une caractéristique d'élasticité linéaire dans le domaine des déformations qu'il peut être amené à subir.

Regardons maintenant la figure 5 et supposons qu'après avoir été amené au contact d'un objet à mesurer le palpeur se déplace par rapport au pont supérieur 36 dans le sens de la flèche F'. Au début les deux leviers restent en contact avec la goupille 82 et au fur et à mesure que le palpeur s'éloigne de sa position de repos la tige 66 fléchit davantage alors que la tige 64 se détend, ce qui fait que la force exercée par la tige 66 sur le levier 74 croît tandis que celle de la tige 64 sur le levier 72 décroît dans les mêmes proportions. Donc la force d'appui du palpeur sur l'objet qui est alors pratiquement égale, au signe près, à la somme algébrique des deux croît elle aussi et comme les deux tiges ont des caractéristiques linéaires cette croissance est également linéaire et deux fois plus rapide que celle de la force de la tige 66 sur le levier 74.

Lorsque le moment de cette force exercée sur le levier 74 par rapport à son axe de pivotement atteint celui de la force auquel il est soumis par le ressort 78 ce levier est encore en contact avec la butée 64 mais aussitôt après il commence à s'en écarter et on passe alors du domaine de mesure au domaine de dégagement.

Naturellement, pour que la force d'appui du palpeur augmente toujours de la même façon jusqu'à ce que ces moments deviennent égaux il est nécessaire que la flexion initiale à laquelle les tiges sont soumises au départ soit suffisante pour que la tige 64 ne cesse d'être déformée par le levier 72 qu'à ce moment-là. Pour plus de sécurité, il est même préférable qu'elle soit alors encore légèrement sous tension.

D'autre part, à partir du moment où le levier 74 commence à s'écarter de la goupille 82 la force d'appui du palpeur devient alors pratiquement égale, au signe près, à la force exercée par le levier 74 sur le ressort 78 multipliée par le rapport des distances de l'axe de pivotement de ce levier à la ligne d'action de cette force et au plan dans lequel sont situées les tiges, et ceci bien qu'au début la tige 66, sous l'action de laquelle le levier se déplace, continue à se déformer encore un peu.

Par conséquent, on obtient bien dans le domaine de dégagement une force d'appui du palpeur qui varie linéairement en fonction du déplacement de celui-ci, mais beaucoup plus lentement que dans le domaine de mesure, le ressort 78 étant prévu pour cela. De plus, il y a intérêt à placer ce ressort près de l'axe de pivotement des leviers pour que cette variation soit la plus lente possible.

La figure 8 illustre ce que l'on vient d'expliquer. Elle montre également qu'à la différence du levier 74 le levier 72 reste en contact avec la goupille 82, ce qui se comprend facilement.

Enfin, il est bien clair que dans le cas où le palpeur se déplace dans le sens de la flèche F c'est tout d'abord la tige 64 qui fléchit davantage et la tige 66 qui se détend et que c'est ensuite le levier 72 qui s'écarte de la butée 82.

Il est clair également qu'avec le générateur de force que l'on vient de décrire la force d'appui du palpeur ne peut pas faire autre chose que de commencer à croître rapidement dès que celui-ci quitte sa position de repos, étant donné que les tiges sont soumises à une précontrainte au départ. Donc, même si ses éléments sont fabriqués avec des tolérances très larges le capteur dont il fait partie ne peut pas présenter les mêmes défauts de linéarité à l'origine que celui des figures 1 et 2.

De plus, rien ne s'oppose à ce que le domaine de mesure de ce capteur soit très large. Par exemple on a déjà réalisé un capteur de ce genre dont le domaine de mesure est de ± 100 μm et on pourrait encore aller beaucoup plus loin si cela était nécessaire.

Ce capteur des figures 5 à 8 présente cependant un léger inconvénient qui est dû à la manière dont les tiges sont fixées. En effet, les bords des trous des bossages 68 et 70 dans lesquels elles sont encastrées risquent souvent d'être très faiblement arrondis ou chanfreinés ce qui fait qu'elles peuvent être amenées à se déplacer et à frotter sur ces bords lorsqu'elles sont soumises à des flexions et que les mesures effectuées peuvent alors ne pas être tout à fait correctes.

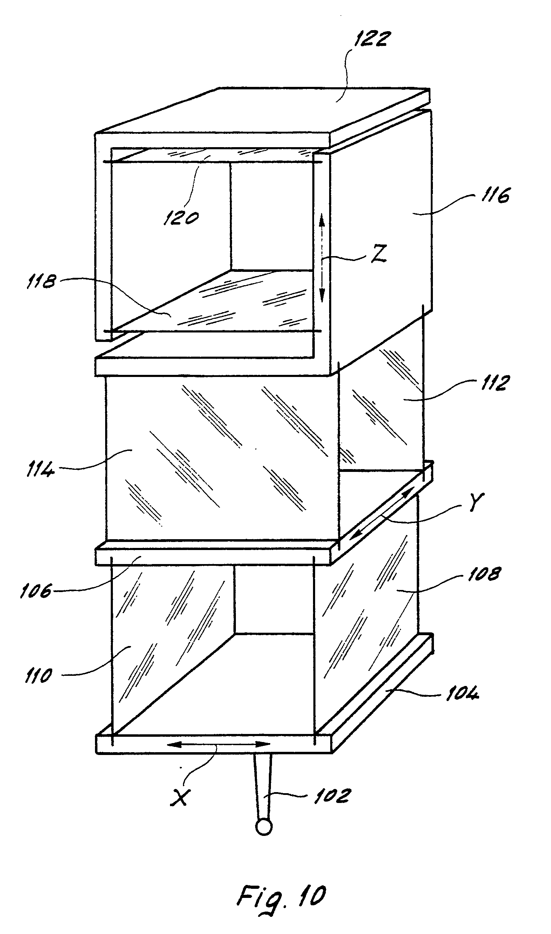

La figure 9 montre une solution qui permet de supprimer facilement cet inconvénient.

Cette solution consiste à réaliser en une seule pièce, par exemple par électro-érosion, un ensemble qui comprend les tiges flexibles 64 et 66, deux parties planes de fixation 90 qui sont percées de trous 92 pour pouvoir être vissées sur des bossages du pont inférieur du capteur et quatre parties de suspensions 94, 96, 98 et 100, coudées en S, qui sont situées dans le même plan que les tiges et les parties planes et qui raccordent celles-ci entre elles de manière à ce que l'ensemble ait le même plan de symétrie que les tiges.

Une autre possibilité consisterait à ne pas prévoir de parties planes et à fixer directement les extrémités libres des parties en S aux bossages du pont inférieur, par exemple en les encastrant elles aussi dans des trous, car ce sont ces parties de suspension qui, en limitant les forces de traction que les tiges exercent sur leurs supports lorsqu'elles sont soumises à des flexions, permettent d'éviter leur déplacement.

Dans la pratique les capteurs que l'on utilise pour mesurer les dimensions d'un objet et notamment d'une pièce à usiner ne sont généralement pas unidimensionnels comme celui des figures 5 à 8 mais bidimensionnels ou tridimensionnels afin de permettre d'effectuer des mesures simultanément et/ou sélectivement selon deux ou trois axes de coordonnées rectangulaires.

La figure 10 montre schématiquement comment le dispositif de suspension du palpeur peut par exemple être réalisé dans le cas d'un capteur tridimensionnel.

Ce dispositif de suspension comprend un premier pont 104, schématisé par une plaque plane, qui porte le palpeur 102 et qui est raccordé à un deuxième pont 106, schématisé de la même façon, par deux lames élastiques 108 et 110 pour constituer un premier parallélépipède déformable dans une première direction X.

Le deuxième pont 106 est relié à son tour par deux autres lames élastiques 112 et 114 à la partie horizontale d'un troisième pont 116 coudé en L pour former un deuxième parallélépipède déformable dans une seconde direction Y orthogonale à la première.

Enfin, la partie verticale du troisième pont 116 constitue avec deux dernières lames 118 et 120 et la partie également verticale d'un quatrième pont 122, lui aussi coudé en L, un troisième parallélépipède déformable dans une troisième direction Z orthogonale aux deux autres.

La partie horizontale du quatrième pont 122 est prévue, elle, pour la fixation du dispositif de suspension à un bâti ou simplement à un support du capteur.

Pour obtenir un capteur tridimensionnel selon l'invention il suffit de compléter ce dispositif de suspension que l'on vient de décrire brièvement en ajoutant à l'intérieur de chaque parallélépipède déformable un transducteur de mesure et un générateur de force comme ceux du capteur de la figure 5 ainsi que les montants et les bossages qui permettent de les porter.

Ceci dit, il est clair que l'invention n'est pas limitée au mode d'exécution que l'on a décrit ni aux variantes possibles que l'on a déjà envisagées.

Par exemple on pourrait très bien imaginer une autre variante dans laquelle les axes de pivotement des leviers ne seraient pas confondus mais seulement parallèles entre eux et dans laquelle une butée serait associée à chacun de ces leviers. Il suffirait pour cela de prévoir quatre goupilles au lieu de deux.

Dans ce cas, plutôt que d'être engagées dans des gorges en V les goupilles qui forment les axes pourraient carrément traverser les leviers mais il faudrait alors veiller à ce que ceux-ci n'aient pas de jeu.

On pourrait également remplacer le ressort hélicoïdal de traction qui agit sur ces leviers par un ressort de torsion.

Par ailleurs, rien n'empêche de faire porter les tiges flexibles par le pont supérieur du dispositif de suspension du palpeur et les autres éléments du générateur de force par le pont inférieur.

En plus de cela on pourrait concevoir beaucoup d'autres formes d'exécution de ce générateur dans lesquelles les tiges flexibles seraient remplacées par des ressorts hélicoïdaux de traction ou de compression et/ou dans lesquelles les pièces mobiles ne seraient plus des leviers mais des pièces capables de se déplacer linéairement dans la même direction que le palpeur.

Enfin, il est évident que le dispositif de suspension pourrait lui aussi être différent.

Par exemple, on pourrait remplacer les lames élastiques par des plaques ou des cadres rigides reliés aux ponts par des articulations du genre à lames croisées, à billes ou autres.

On pourrait aussi abandonner l'idée de parallélépipède déformable et faire appel pour réaliser ce dispositif à des paliers rectilignes à roulements ou à air.

## Revendications

1. Capteur pour la mesure des dimensions d'un objet par palpage comprenant:
   - un palpeur (42; 102);
   - un dispositif de suspension comprenant au moins une première partie (34; 104) dont ce palpeur est solidaire et une deuxième partie (36; 106) assemblées de façon à pouvoir se déplacer sensiblement parallèlement l'une par rapport à l'autre dans une première direction(F, F'; X);
   - un transducteur (52) pour mesurer le déplacement relatif de ces deux parties; et
   - un générateur de force (62) pour assigner une position de repos stable au palpeur et pour lui permettre d'exercer sur la surface de l'objet à mesurer une force d'appui qui commence par croître linéairement et rapidement au fur et à mesure qu'il s'écarte de sa position de repos dans un domaine de mesure et qui devient ensuite légèrement croissante dans un domaine de dégagement, ce générateur comportant lui-même des premiers moyens élastiques (64, 66) liés à l'une des parties du dispositif de suspension et déformables dans ladite première direction et un ensemble porté par l'autre partie de ce dispositif qui comprend des moyens de butée (82), deux éléments mobiles (72, 74) qui interagissent avec les premiers moyens élastiques et des seconds moyens élastiques (78) qui agissent en sens opposé sur ces éléments mobiles pour tenter de les maintenir en permanence en appui contre les moyens de butées, les premiers et seconds moyens élastiques étant tels que, dans le domaine de mesure, les éléments mobiles restent en contact avec les moyens de butée pour amener les premiers moyens élastiques à se déformer et que, dans le domaine de dégagement, l'un des éléments mobiles s'écarte progressivement de ces moyens de butée sous l'action des premiers moyens élastiques et à l'encontre des seconds qui se déforment à leur tour, caractérisé par le fait que les premiers moyens élastiques comprennent deux ressorts antagonistes (64, 66) sur lesquels les éléments mobiles (72, 74) agissent en sens contraire, et réciproquement, et qui sont soumis par ces éléments à une précontrainte lorsque le palpeur (42; 102) est en position de repos, cette précontrainte étant suffisante pour que ces ressorts soient toujours tous les deux plus ou moins sous tension tant que les déplacements dudit palpeur se situent à l'intérieur du domaine de mesure.

2. Capteur selon la revendication 1, caractérisé par le fait que les deux ressorts antagonistes sont des tiges flexibles (64, 66) sensiblement identiques, qui sont fixées par leurs extrémités à des éléments de support (68, 70) de l'une des parties du dispositif de suspension de façon à être disposées symétriquement par rapport à un premier plan sensiblement perpendiculaire à ladite première direction (F, F'; X) et qui sont soumises par les éléments mobiles (72, 74) à une flexion initiale dans cette direction lorsque ledit palpeur est en position de repos.

3. Capteur selon la revendication 2, caractérisé par le fait que lesdits tiges flexibles (64, 66) sont sensiblement parallèles entre elles.

4. Capteur selon la revendication 2 ou 3, caractérisé par le fait que lesdites tiges (64, 66) sont fixées auxdits éléments de support (68, 70) par l'intermédiaire de parties de suspension (94, 96, 98, 100) qui permettent de limiter les forces de traction qu'elles exercent sur ces éléments lorsqu'elles sont soumises à des flexions.

5. Capteur selon la revendication 4, caractérisé par le fait que lesdites parties de suspension (94, 96, 98, 100) sont des parties coudées en S qui prolongent les tiges flexibles (64, 66) et qui sont situées sensiblement dans le même plan qu'elles.

6. Capteur selon l'une quelconque des revendications 2 à 5, caractérisé par le fait que les éléments mobiles sont constitués par deux leviers jumeaux (72, 74) qui sont sensiblement symétriques par rapport au premier plan lorsque le palpeur (42; 102) est en position de repos et qui peuvent pivoter dans un deuxième plan sensiblement perpendiculaire à celui-ci.

7. Capteur selon la revendication 6, caractérisé par le fait que le deuxième plan passe sensiblement par le milieu des tiges flexibles (64, 66).

8. Capteur selon la revendication 6 ou 7, caractérisé par le fait que les moyens de butée (82) et les tiges flexibles (64, 66) se trouvent entre les leviers (72, 74) et que les seconds moyens élastiques comprennent un ressort (78) qui attire ces leviers l'un vers l'autre.

9. Capteur selon l'une quelconque des revendications précédentes, caractérisé par le fait que lesdites première et deuxième parties du dispositif de suspension sont des ponts (34, 36; 104, 106) qui sont reliés entre eux par des lames élastiques (44, 46; 108, 110) de façon à constituer un parallélépipède déformable dans ladite première direction (F, F'; X).

10. Capteur selon l'une quelconque des revendications 1 à 8, caractérisé par le fait que le dispositif de suspension comporte également une troisième partie (116) raccordée à la deuxième (106) et une quatrième partie (122) raccordée à la troisième de façon que les deuxième et troisième parties puissent se déplacer sensiblement parallèlement l'une par rapport à l'autre dans une deuxième direction (Y) orthogonale à la première (X) et que les troisième et quatrième parties puissent se déplacer également sensiblement parallèlement l'une par rapport à l'autre dans une troisième direction (Z) orthogonale aux deux autres (X, Y), et par le fait qu'il comprend également deux autres transducteurs et deux autres générateurs de force pour respectivement mesurer les déplacements et créer une force d'appui du palpeur dans lesdites deuxième et troisième directions (Y, Z).

11. Capteur selon la revendication 10, caractérisé par le fait que les quatre parties (104, 106, 116, 122) du dispositif de suspension sont reliées entre elles par des lames élastiques (108, 110, 112, 114, 118, 120) de façon à former trois parallélépipèdes déformables respectivement dans lesdites première, deuxième et troisième directions (X, Y, Z).

## Claims

1. A contact sensor for measuring the dimensions of a piece, comprising :
   - a feeler (42; 102);
   - a suspension device comprising at least one first part (34; 104) to which the feeler is rigidly connected and a second part (36; 106) which are assembled so as to be able to move substantially parallel to one another in a first direction (F, F'; X);
   - a transducer (52) for measuring the amplitude of the relative movement of these two parts; and
   - force generating means (62) for holding the feeler in a stable rest position and allowing it to exert on the surface of the piece to be measured a bearing force which initially increases linearly and rapidly as the feeler moves away from its rest position in a measuring zone and which then increases at a slight rate in a disengagement zone, this force generating means comprising first elastic means (64, 66) connected to one of said part of the suspension device and deformable in said first direction, and an assembly carried by the other part of this device and comprising abutment means (82), two mobile elements (72, 74) which interact with the first elastic means, and second elastic means (78) acting oppositely on these mobile element to try to permanently bias them into abutting engagement with the abutment means, the first and second elastic means being such that, in the measuring zone, the mobile elements remain in contact with the abutment means to cause the first elastic means to deform and, in the disengagement zone, one of the mobile elements progressively moves away from the abutment means under the action of the first elastic means and against the action of the second elastic means which in turn are deformed,

   characterized by the fact that the first elastic means comprise two oppositely acting springs (64, 66) on which the mobile elements (72, 74) act in opposite directions, and vice versa, and which are prestressed by these elements when the feeler (42; 102) is in the rest position to a degree sufficient for said springs to remain more or less under tension as long as the movements of the feeler are situated within the measuring zone.

2. A sensor according to claim 1, characterized by the fact that the two oppositely acting springs are substantially identical flexible rods (64, 66) which are fixed by their ends to support elements (68, 70) of one of the parts of the suspension device and are arranged symmetrical to a first plane substantially perpendicular to said first direction (F, F'; X) and which are acted upon by the mobile elements (72, 74) to flex them initially in this first direction when said feeler is in the rest position.

3. A sensor according to claim 2, characterized by the fact that said flexible rods (64, 66) are substantially parallel to one another.

4. A sensor according to claim 2 or 3, characterized by the fact that said rods (64, 66) are fixed to said support elements (68, 70) through suspension sections (94, 96, 98, 100) which are arranged to limit the traction forces exerted by the rods on said elements when they are caused to flex.

5. A sensor according to claim 4, characterized by the fact that said suspension sections (94, 96, 98, 100) are parts bent in generally S-shape in extension of and situated substantially in the same plane as the flexible rods (64, 66).

6. A sensor according to any one of claims 2 to 5, characterized by the fact that the mobile elements are formed by two twin levers (72, 74) which are substantially symmetrical to the first plane when the feeler (42; 100) is in the rest position and which can pivot in a second plane substantially perpendicular to the first plane.

7. A sensor according to claim 6, characterized by the fact that the second plane passes substantially through the middle of the flexible rods (64, 66).

8. A sensor according to claim 6 or 7, characterized by the fact that the abutment means (82) and the flexible rods (64, 66) are located between the levers (72, 74), and that the second elastic means comprise a spring (78) which biases these levers towards one another.

9. A sensor according to any one of the preceding claims, characterized by the fact that said first and second parts of the suspension device are frame members (34, 36; 104, 106) connected together by elastic blades (44, 46; 108, 110) to form a parallelepiped which is deformable in said first direction (F, F'; X).

10. A sensor according to any one of claims 1 to 8, characterized by the fact that the suspension device further comprises a third part (116) connected to the second part (106) and a fourth part (122) connected to the third part whereby the second and third parts can move substantially parallel to one another in a second direction (Y) orthogonal to the first direction (X) and that the third and fourth parts can also move substantially parallel to one another in a third direction (Z) orthogonal to the two others (X, Y), and by the fact that it also comprises two further transducers and two further force generating means for respectively measuring the amplitude of the movements and providing a bearing force of the feeler in said second and third directions (Y, Z).

11. A sensor according to claim 10, characterized by the fact that the four parts (104, 106, 116, 122) of the suspension device are connected together by elastic blades (108, 110, 112, 114, 118, 120) to form three parallelepipeds which are deformable respectively in said first, second and third directions (X, Y, Z).

## Patentansprüche

1. Fühler für die Dimensionsmessung eines Objekts durch Abtastung, umfassend:
   - einen Taster (42; 102),
   - eine Aufhängevorrichtung mit mindestens einer ersten Partie (34; 104), die mit dem Taster verbunden ist, und einer zweiten Partie (36; 106), die derart verbunden sind, daß sie relativ zueinander im wesentlichen in einer ersten Richtung (F, F'; X) verlagerbar sind,
   - einen Wandler (52) zum Messen der relativen Verlagerung der beiden Partien, und
   - einen Krafterzeuger (62) zum Festlegen einer stabilen Ruheposition für den Taster und zum Ermöglichen des Ausübens einer Anlagekraft durch den Taster auf die Oberfläche des zu messenden Objekts, welche in einem Meßbereich mit zunehmender Auslenkung des Tasters aus der Ruheposition linear und schnell ansteigt und dann in einem Freisetzbereich leicht ansteigend wird, welcher Krafterzeuger seinerseits mit einer der Partien der Aufhängevorrichtung verbundene und in der ersten Richtung deformierbare erste elastische Mittel (64, 66) und eine von der anderen Partie dieser Vorrichtung getragene Baugruppe umfaßt, die Anschlagmittel (82), zwei mit den ersten elastischen Mitteln zusammenwirkende bewegliche Elemente (72, 74) und zweite elastische Mittel (78) umfaßt, welche in entgegengesetzter Richtung auf die beweglichen Elemente wirken mit der Tendenz, sie dauernd in Anlage an den Anschlagmitteln zu halten, welche ersten und zweiten elastischen Mittel derart ausgebildet sind, daß die beweglichen Elemente im Meßbereich in Kontakt mit den Anschlagmitteln bleiben, um die ersten elastischen Mittel zur Deformation zu bringen, und daß im Freisetzbereich eines der beweglichen Elemente sich progressiv von den Anschlagmitteln unter der Wirkung der ersten elastischen Mittel und entgegen den zweiten, die sich ihrerseits deformieren, entfernt, dadurch gekennzeichnet, daß die ersten elastischen Mittel zwei einander entgegenwirkende Federn (64, 66) umfassen, auf die die beweglichen Elemente (72, 74) in konträrem und reziprokem Sinne einwirken und die durch diese Elemente einer Vorspannung unterworfen sind, solange der Taster (42; 102) in Ruheposition ist, welche Vorspannung hinreicht, daß diese Federn ständig beide mehr oder weniger unter Spannung stehen, wenn die Verlagerungen des Tasters sich im Innern des Meßbereichs befinden.

2. Fühler nach Anspruch 1, dadurch gekennzeichnet, daß die beiden einander entgegenwirkenden Federn im wesentlichen identische flexible Stäbe (64, 66) sind, die mit ihren Enden an Supportelementen (68, 70) einer der Partien der Aufhängevorrichtung derart befestigt sind, daß sie symmetrisch bezüglich einer ersten, zu der ersten Richtung (F, F'; X) im wesentlichen senkrechten Ebene angeordnet sind und die durch die beweglichen Elemente (72, 74) einer Anfangsauslenkung in dieser Richtung unterworfen sind, wenn sich der Taster in Ruheposition befindet.

3. Fühler nach Anspruch 2, dadurch gekennzeichnet, daß die flexiblen Stäbe (64, 66) zueinander im wesentlichen parallel sind.

4. Fühler nach Anspruch 2 oder 3, dadurch gekennzeichnet, daß die Stäbe (64, 66) an den Supportelementen (68, 70) über Suspensionsabschnitte (94, 96, 98, 100) befestigt sind, die es ermöglichen, die Traktionskräfte zu begrenzen, die sie auf diese Elemente ausüben, sobald sie Auslenkungen unterworfen werden.

5. Fühler nach Anspruch 4, dadurch gekennzeichnet, daß die Suspensionsabschnitte (94, 96, 98, 100) S-förmig abgewinkelte Abschnitte sind, welche die flexiblen Stäbe verlängern und im wesentlichen in derselben Ebene wie diese liegen.

6. Fühler nach einem der Ansprüche 2 bis 5, dadurch gekennzeichnet, daß die beweglichen Elemente von zwei Zwillingshebeln (72, 74) gebildet sind, die im wesentlichen symmetrisch bezüglich der ersten Ebene sind, wenn der Taster (42; 102) in Ruheposition ist, und die in einer zweiten, zu dieser im wesentlichen senkrechten Ebene schwenkbar sind.

7. Fühler nach Anspruch 6, dadurch gekennzeichnet, daß die zweite Ebene im wesentlichen durch die Mitte der flexiblen Stäbe (64, 66) verläuft.

8. Fühler nach Anspruch 6 oder 7, dadurch gekennzeichnet, daß die Anschlagmittel (82) und die flexiblen Stäbe (64, 66) sich zwischen den Hebeln (72, 74) befinden und daß die zweiten elastischen Mittel eine Feder (78) umfassen, die die Hebel gegeneinander zieht.

9. Fühler nach einem der vorangehenden Ansprüche, dadurch gekennzeichnet, daß die erste und zweite Partie der Aufhängevorrichtung Brücken (34, 36; 104, 106) sind, die miteinander durch elastische Lamellen (44, 46; 108, 110) derart verbunden sind, daß sie ein in der ersten Richtung (F, F', X) deformierbares Parallelepiped bilden.

10. Fühler nach einem der Ansprüche 1 bis 8, dadurch gekennzeichnet, daß die Aufhängevorrichtung gleichermaßen eine mit der zweiten Partie (106) verbundene dritte Partie (116) sowie eine mit der dritten verbundene vierte Partie (122) umfaßt derart, daß die zweite und dritte Partie sich im wesentlichen parallel in einer zweiten Richtung (Y) senkrecht zu der ersten Richtung (X) gegeneinander verlagern können und daß die dritte und vierte Partie sich gleichermaßen im wesentlichen parallel zu einer dritten Richtung (Z) senkrecht zu den beiden anderen (X, Y) gegeneinander verlagern können, und daß sie ferner zwei weitere Wandler und zwei weitere Krafterzeuger umfaßt für die Messung der Verlagerungen bzw. die Erzeugung der Anlagekraft des Tasters in der zweiten und dritten Richtung (Y, Z).

11. Fühler nach Anspruch 10, dadurch gekennzeichnet, daß die vier Partien (104, 106, 116, 122) der Aufhängevorrichtung miteinander durch elastische Lamellen (108, 110, 112, 114, 118, 120) derart verbunden sind, daß drei in der ersten bzw. zweiten bzw. dritten Richtung (X, Y, Z) deformierbare Parallelepipede gebildet werden.

Fig. 1

Fig. 2

Force d'appui

Déplacement
du palpeur

Domaine de
dégagement

Domaine de
dégagement

*Fig. 3*

Domaine
de mesure

Force d'appui

A

B

Déplacement
du palpeur

*Fig. 4*

Fig. 5

Fig. 6

Fig. 8

Fig.7

Fig. 9

14

Fig. 10